# EUROPEAN PATENT APPLICATION

(11) **EP 1 063 076 A1**
(43) Date of publication of application: **27.12.2000**
(21) Application number: 99961455.5
(22) Date of filing: 28.12.1999
(51) Int. Cl.: B29C 49/06, B29C 49/12

(54) **WIDE-MOUTHED CONTAINER BOTTOM MOLDING METHOD USING STRETCH BLOW MOLDING**

(30) Priority: 28.12.1998 JP 37386198
(71) Applicant: A.K. Technical Laboratory, Inc.,, Hanishina-gun, Nagano-ken 389-0603 (JP)
(72) Inventor: TAKEUCHI, S., A.K. Tech. Lab., Inc., Hanishina-gun, Nagano 389-0603 (JP)
(74) Representative: Twelmeier, Ulrich, Dipl.Phys.
(86) International application number: JP9907378
(87) International publication number: WO0038902

(57) **Abstract**

A method for molding a bottom portion of a wide-mouthed container by stretch blow molding. By stretching a body portion and a bottom portion of a preform separately and stepwise, it is possible to mold a bottom surface in an arbitrary condition in which the bottom portion of the wide-mouthed container is thin like the body portion thereof and is even in thickness distribution. As for a blow mold 11 for stretch blow molding a preform 1, in which a thick, short-cylindrical body portion 2 and a thin, plate-like bottom portion 3 which continues from the bottom end of the body portion is integrally molded, into a wide-mouthed container 4, 5, there is used a blow mold 11 comprising a bottom mold 13 which can proceed and retreat within a cavity 12. As a stretching rod 16, there is used a stretching rod 16 comprising both a core member 18 which pressures a central portion 3b of the bottom portion 3, and a skirt member 19 which is positioned in the periphery of the core member 18 and which pressures the corner portion 2a. Stretching is carried out by precedingly stretching either one of the respective body portion 2 or the bottom portion 3 of the preform 1 by means of the stretching rod 16 until the body portion 2 reaches the bottom edge 11b of the cavity. The bottom portion 3, which is positioned above the bottom mold 13 having been ducked beneath a bottom surface of the cavity, is pushed back into the cavity by means of the bottom mold 13 and is further bendingly stretched upwards from the bottom edge 11b of the cavity.

## Description

### TECHNICAL FIELD

The present invention relates to a method for molding a bottom portion of a wide-mouthed container by stretch blow molding, and in particular, relates to a method for molding a bottom portion of a synthetic resin-made wide-mouthed container which is manufactured by stretch blow molding a wide-mouthed preform having been injection molded.

### BACKGROUND ART

In a wide-mouthed container formed to have a thin body portion and bottom portion by stretch blow molding, there is not much difference between the outer diameter of its mouth portion and the outer diameter of its body portion. Therefore, the radial stretching ratio is small compared to a narrow-mouthed container such as a bottle. Thus, the stretching ratio of the body portion is increased by forming a preform into a truncated cone shape to increase the radial stretching ratio, or by forming a preform into a container-like (cup-like) shape to stretch the body portion as long as possible in the axial direction.

Stretching of the above-mentioned truncated cone shaped preform is conducted by abutting a pressing member on the tip end of a stretching rod to the center of the bottom portion. Stretching of a container shaped preform is conducted by abutting a disk-like formed pressing member to a corner portion formed on the border between the bottom edge of the body portion and the bottom portion.

A problem when stretching by pressing against the central portion of the bottom portion is that the stretching stress caused by extension of the stretching rod concentrates in the central portion, and if the resin temperature of the central portion is about the same resin temperature as the body portion, the pressing member on the tip end of the stretching rod is pierced through the central portion. In order to prevent this, the central portion of the bottom portion is made thinner than other portions to keep the resin temperature low so that the central portion of the bottom portion can sufficiently resist the pressing force. However, the central portion is not stretched compared to other portions and stretching in the radial direction by air blow is not sufficient, and thus, this portion tends to remain as a lenticular thickened portion in the center of the bottom portion of the wide-mouthed container. Since this central portion is hardly stretched, there is a problem in that it is inferior in impact strength, and inferior in heat resistance than other portions having been sufficiently stretched.

A problem when stretching by pressing a disk-like pressing member to a corner portion on the periphery of the bottom portion is that the bottom portion is hardly stretched, and the bottom portion of the wide-mouthed container is left in its injection molded state. Such a stretching method may apply to polypropylene or polyethylene in which the resin itself has flexibility; but it is difficult to apply this method to polyester resins, such as polyethylene terephthalate (PET) or polyethylene naphthalate (PEN), where various physical properties are enhanced by biaxial orientation.

Most of the wide-mouthed containers are used as packing containers for processed foods having viscosity such as butter, jam, peanut butter and honey; and such processed foods are filled into the wide-mouthed container in a heated condition. Therefore, insufficient stretching of the bottom portion results in heat deformation upon filling, and this impairs product image even if this deformation occurs in the bottom portion.

Further, if the container is sealed after heat-filling, there frequently occurs deformation in the body portion by decompression which occurs as the content cools.

This deformation by decompression can be made inconspicuous by forming the body portion of the wide-mouthed bottle into a polyhedral shape. However, since it is not possible to adopt this to a wide-mouthed container having a cylindrical body portion, the shape of the wide-mouthed container being heat-filled is of a polyhedron, which almost always caused trouble in label attachment compared to cylindrical containers, and which is not good in visibility of the content.

There have been made attempts to form the bottom portion of the wide-mouthed container so that it easily deforms upon decompression. For example, the body portion is prevented from deforming by decompression by forming the bottom portion into a bellows-like form with a projecting and depressing surface formed by a plurality of concentric circles so that the bottom portion deforms largely in a concaving manner inwardly from the periphery of the bottom portion. Thus, heat-filling is possible even to a cylindrical wide-mouthed container.

However, as described previously, in stretch blow molding, the bottom portion of the preform is the most difficult portion to be stretched. The thickness distribution of the bottom portion tends to become uneven compared to the body portion; and it is difficult to transfer the projecting and depressing surface, which is formed on a mold surface of a bottom mold, to the bottom portion exactly according to the mold surface even when a high blow-air pressure is employed; and in the bellows formed on the bottom surface, the bending portion comes to have a thick, uneven section. Thus, deformation upon decompression is poor, and is not enough to prevent decompression deformation of the body portion.

The present invention has been contrived in order to solve the conventional problems in molding a bottom portion of the above-described wide-mouthed container, and an object of the present invention is to provide a method for molding a bottom portion of a wide-mouthed container by stretch blow molding which makes it possible to mold, according to stretching the body portion and the bottom portion respectively and separately and stepwise, the bottom portion of the preform thin like its body portion in a state in which the thickness distribution is controlled, and, which also makes it possible to form the bottom portion into a bellows-like form with an acute projecting and depressing surface formed by a plurality of concentric circles according to the usage of the wide-mouthed container.

### DISCLOSURE OF THE INVENTION

In order to achieve the above-described object, the present invention provides a method for molding a bottom portion of a wide-mouthed container by stretch blow molding, the method comprising the steps of injection-molding a preform which has a thick, short-cylindrical body portion and a thin, plate-like bottom portion which continues from the bottom end of the body portion, and in which the border therebetween is integrally formed as a corner portion; employing, as a blow mold for stretch blow molding the preform into a wide-mouthed container, a blow mold comprising a bottom mold which can proceed and retreat within a cavity; employing, as a stretching rod, a stretching rod comprising both a core member which pressures a central portion of the bottom portion, and a skirt member which is positioned in the periphery of the core member and which pressures the corner portion; carrying out stretching by precedingly stretching either one of the respective body portion or the bottom portion of the preform by means of the stretching rod until the body portion reaches the bottom edge of the cavity, and the bottom portion protrudes below the bottom edge of the cavity and comes to a position above the bottom mold having been ducked beneath a bottom surface of the cavity; then protruding the bottom mold into the cavity in which the preform is in an air-blown state, to further stretch the bottom portion having been primarily stretched upwards from the bottom edge of the cavity; and forming a thin bottom portion of a container with an even thickness distribution.

In the method for molding a bottom portion according to the present invention, the longitudinal stretching of the bottom portion and body portion of the preform is separately conducted by the core member and the skirt member; and after primary stretching by the stretching rod, the bottom portion is again stretched by the bottom mold in order to form a bottom portion of a wide-mouthed container. Thus, the stretching of the bottom portion is reliably conducted and the thickness distribution of the bottom portion is controlled compared to the conventional case in which the center of the bottom portion is pressed and stretching of the bottom portion and the body portion is conducted simultaneously.

A different aspect of the present invention is such that: as for the bottom mold of the blow mold, there is used a bottom mold in which the mold surface facing the cavity has an acute projecting and depressing surface formed by a plurality of concentric circles; as for the stretching rod, there is used a stretching rod in that the skirt member is provided around the core member so that it is fixed to the stretching rod with a play existing therebetween, and is constantly pressured downwards by means of a spring member; the bottom mold is protruded into the cavity in a state in which the lower end of the body portion of the preform is pushed to the bottom edge of the cavity by means of the skirt member; the bottom portion having been primarily stretched is further stretched so that it is pushed back upwards from the bottom edge of the cavity; and thus the bottom portion is formed into a bellows-like form with an acute projecting and depressing surface formed by a plurality of concentric circles by means of the bottom mold.

In such a method for molding a bottom portion, the longitudinal stretching of the body portion of the preform is conducted by the skirt member. Further, stretching of the bottom surface, which is by the stretching rod being abutted to the central portion of the bottom portion, is conducted in a state in which the corner portion of the periphery of the bottom surface is supported by the skirt member. Thus, the bottom surface is stretched to be thinner than is conventionally possible. Further, the molding of the bottom surface is conducted by pressing the bottom mold into the cavity after thinly stretching, and pushing the mold surface to the thin bottom surface. Thus, even when the mold surface of the bottom mold has an acute projecting and depressing surface, transferring of such projecting and depressing surface to the bottom surface is reliably conducted, making it possible to mold a bellows-like bottom surface which prevents deformation of the body portion by stretching deformation into the container caused by decompression.

The preform of the present invention is such that: it is made of a thermoplastic resin which can be stretch blow molded; the bottom portion is comprised of a central portion to which the core member of the stretching rod abuts, and an intermediate portion between the central portion and the corner portion to which the skirt member abuts; and the intermediate portion is formed so that it is made thicker than the central portion by means of a protuberance portion of a concentric circle so that it is streched before the central portion.

In a preform with such a structure, the intermediate portion of the bottom portion is formed thicker than the central portion.
Thus, because of the difference in thickness, in comparing the amount of heat the resin of both the portions possesses, the amount is larger in the intermediate portion than in the central portion. When the central portion is pushed by the core member, the intermediate portion precedingly stretches and the protuberance portion is thinly stretched. Thus, the thickness between the central portion is eliminated, whereafter the whole bottom portion is stretched until the skirt member reaches the corner portion.

In the prior art, in order to prevent the bottom portion from being pierced due to the concentration of stress to the central portion during stretching, the bottom portion is set to such a preform temperature that the entire bottom portion is made thinner than the body portion to set the temperature thereof lower than that of the body portion to stretch the bottom portion after the body portion has been stretched thinner than the bottom portion. As a result, the thickness distribution of the bottom becomes un-uniform. However, this problem can be easily solved and it makes it possible to mold a bottom portion corresponding to the use of the wide-mouthed container.

Further, the present invention is such that: the core member and the skirt member of the stretching rod are integrally formed; the core member is protrudingly formed at a required length compared to the skirt member so that stretching of the bottom portion of the preform precedes; and, after the bottom portion is extended by the stretching rod, the skirt member is abutted to the corner portion in the border between the body portion and the bottom portion in order to stretch the body portion down to the bottom edge of the cavity.

By adopting such a stretching rod, it is possible to stretch the body portion and the bottom portion stepwise by means of extension of the stretching rod. Even when stretching the body portion and the bottom portion separately at a sequential timing, it is possible to simplify the stretching phase in that it is possible to conduct both operations sequentially by one extension operation of the stretching rod.

The stretching rod of the present invention is such that: it is insertingly provided in a blow core in a vertically movable manner; by fitting the blow core and a lip mold which sandwiches and holds a mouth portion of the preform, the core member on the tip end of the stretching rod and the skirt member are placed in an inserted position within the preform; and, by extension of the stretching rod, either the core member or the skirt member abuts against either the bottom portion or the corner portion of the preform to carry out stretching.

### BRIEF DESCRIPTION OF THE DRAWINGS

Fig. 1 is a longitudinal sectional view of a preform used in the method for molding a bottom portion of a wide-mouthed container by stretch blow molding according to the present invention;
Fig. 2 is a planar view of a preform used in the method for molding a bottom portion of a wide-mouthed container by stretch blow molding according to the present invention;
Fig. 3 is a longitudinal sectional view of a wide-mouthed container of a first embodiment molded to have a thin bottom portion according to the present invention;
Fig. 4 is a longitudinal sectional view of a wide-mouthed container of a second embodiment wherein the bottom portion is formed into a bellows-like form with a projecting and depressing surface of concentric circles according to the present invention;
Fig. 5 is a longitudinal sectional view showing a state in which the wide-mouthed container of the second embodiment according to the present invention is deformed by decompression;
Fig. 6 is a longitudinal sectional view showing a state inside a mold before stretch blow molding the wide-mouthed container of the first embodiment;
Fig. 7 is a longitudinal sectional view showing a state in which the bottom portion is precedingly stretched according to the first embodiment;
Fig. 8 is a longitudinal sectional view showing a stretching state of a body portion after the bottom portion of the first embodiment has been stretched;
Fig. 9 is a sectional view taken upon completion of the wide-mouthed container of the first embodiment by protruding the bottom mold in the cavity in an air-blown state;
Fig. 10 is a longitudinal sectional view showing a state inside a mold before stretch blow molding the wide-mouthed container of the second embodiment;
Fig. 11 is a horizontal sectional view of the cavity taken along the A-A line in Fig. 10;
Fig. 12 is a longitudinal sectional view showing a state in which the body portion is first stretched and then the bottom portion is stretched thereafter according to the second embodiment; and
Fog. 13 is a sectional view taken upon completion of the wide-mouthed container of the second embodiment having its bottom portion formed into a bellows-like shape by protruding the bottom mold in the cavity in an air-blown state.

### BEST MODE FOR CARRYING OUT THE INVENTION

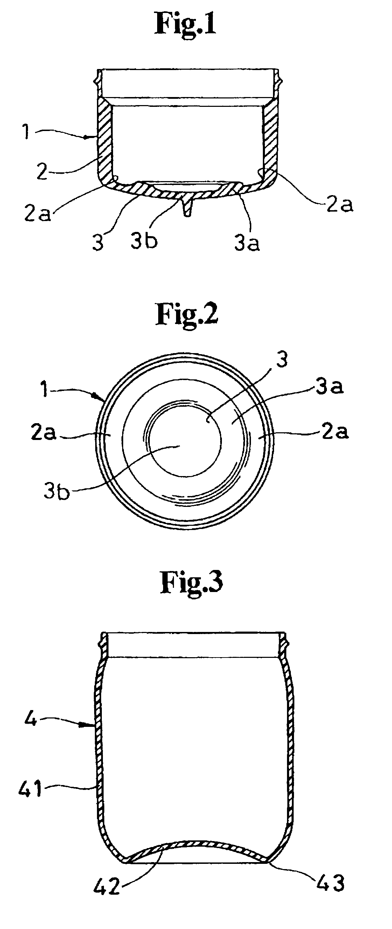

The present invention will hereinafter be explained with reference to the accompanying drawings, to which the present invention shall not be limited. Fig. 1 and Fig. 2 show a first embodiment of a preform which can be manufactured by adopting the method of the present invention.

The preform 1 is made of a thermoplastic resin such as polyethylene terephthalate (PET), polyethylene naphthalate (PEN), polyethylene (PE), polypropylene (PP) and polycarbonate (PC).

The preform 1 made of such resin is composed of a body portion 2 and a bottom portion 3. The body portion 2 is of a short cylindrical shape and is made thick by injection molding. The bottom portion 3 is made to be thin and plate-like, and continues from the bottom end of the body portion. The border therebetween is integrally formed as a corner portion 2a.

The bottom portion 3 of the preform 1 is composed of a central portion 3b and an intermediate portion 3a between the central portion 3b and the corner portion 2a. The intermediate portion 3a is designed so that: it is made thicker than the central portion 3b by means of a protuberance portion of a concentric circle; because of the difference between the thickness of both portions, when comparing the heat possessed thereby, the amount is larger in the intermediate portion 3a than in the central portion 3b; and, the intermediate portion 3a is precedingly stretched and then the whole bottom portion is stretched.

The thickness in the respective portions of such a preform 1, if the molding material is polyethylene terephthalate, for example the body portion is 3.0 mm, the central portion of the bottom portion is 1.5 mm and the intermediate portion is 2.5 to 3.0 mm; and it is in a heated state upon blow molding. Stretch blow molding is conducted when the surface temperature of the preform is in a range of from 90 to 110 °C. The air pressure upon air-blow is, for example, 18 to 25 kgf/cm².

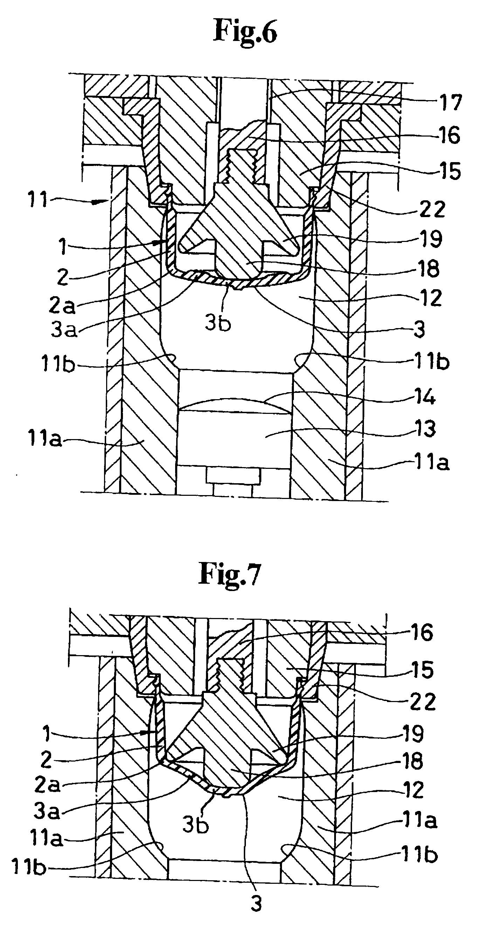

Fig. 3 shows a wide-mouthed container 4 of the first embodiment. It is a wide-mouthed container 4 which is manufactured by stretch blow molding the above-described preform 1, and which bottom portion has a general structure. The wide-mouthed container 4 is molded according to a molding method shown in Fig. 6 through Fig. 9. Accordingly, not only the body portion 41, but the thickness distribution from the bottom portion periphery 43 to the bottom portion 42 which is formed like a dome inwardly facing the container is even; and thus, the conventional phenomenon, in which the central portion becomes lenticularly thick, is resolved. Since the whole bottom portion is stretch-molded to be thin and approximately uniform, impact strength and heat resistance are enhanced.

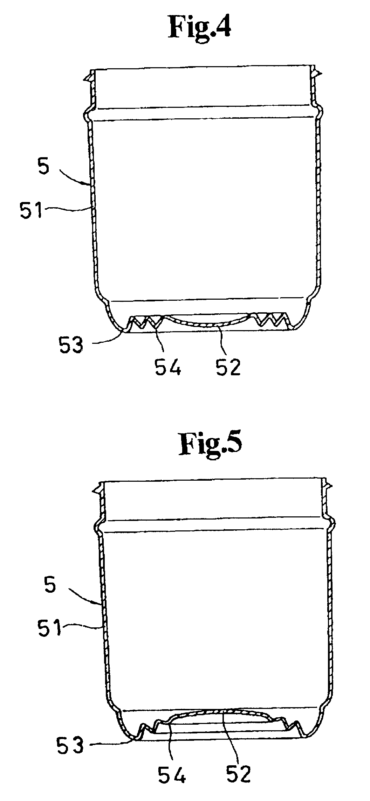

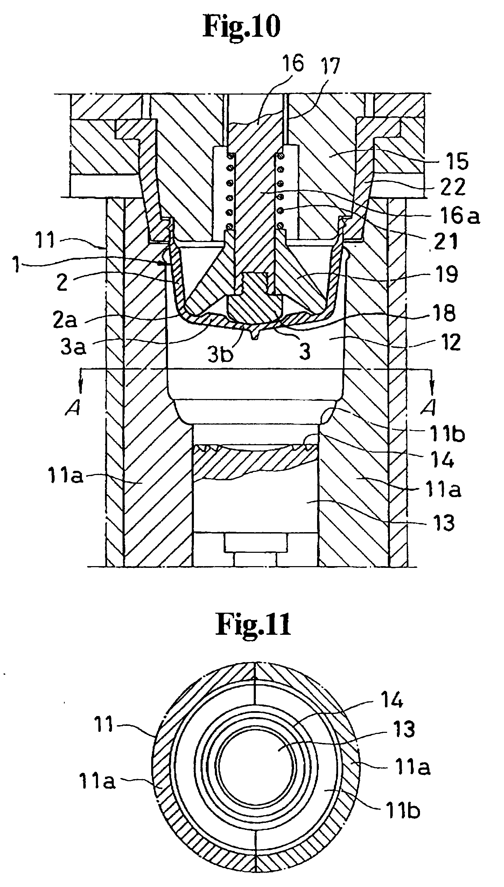

Fig. 4 shows a wide-mouthed container 5 of a second embodiment in which the structure of the bottom portion is bellows-like. The wide-mouthed container 5 is molded according to a molding method shown in Fig. 10 through Fig. 13. Accordingly, along with the body portion 51, the thickness of the bottom portion 52 is also formed thin and uniform. Thus, transferring of the mold surface with an acute projecting and depressing surface formed by a plurality of concentric circles to the bottom surface is reliably conducted, and the bottom surface 54 of the bottom portion 52 is formed to be bellows-like by concentric circles from the bottom portion periphery 53. As described above, when the container is sealed, as the inner portion is decompressed, the bellows-like bottom surface 54 deforms easily and the bottom portion 52 is pulled into the container, and thus, it is possible to prevent the deformation by decompression of the body portion 51, as shown in Fig. 5.

Fig. 6 and after show the method of molding a bottom portion according to the present invention. Fig. 6 through Fig. 9 orderly explain a molding process of the first embodiment, and Fig. 10 through Fig. 13 orderly explain a molding process of the second embodiment, respectively. In each of the molding processes, the same portion is explained with the same reference number. [Molding of bottom portion of wide-mouthed container 4 of the first embodiment (Fig. 6 through Fig. 9)]

In the figures, reference numeral 11 denotes a blow mold for a wide-mouthed container, which mold is of a pair of mold halves 11a, 11a. The mold has a bottom mold 13 which proceeds and retreats against a cavity 12. The mold surface 14 of the bottom mold 13 facing the cavity 12 is spherical, and by raising the bottom mold 13, it is placed in a protruding position from the bottom edge 11b of the cavity into the cavity 12. When lowered, the mold surface is in a ducking position within a hole in the bottom surface of the cavity, and above the mold surface, an insertion space is formed for the bottom portion of the preform having been primarily stretched.

Reference numeral 15 designates a blow core, and a stretching rod 16 is inserted therein in an ascentable-and-descentable manner with a gap 17 for air blow provided therearound. At the tip end of the stretching rod 16, there is integrally formed a core member 18 which presses the central portion 3b of the bottom portion of the preform 1, and a skirt member 19 with a large diameter which presses the corner portion 2a. In order for the stretching of the bottom portion 3 to precede, the core member 18 is protrudingly formed at a required length compared to the skirt member 19.

The preform 1 is in a state in which, except for its mouth portion, the whole preform possesses a necessary amount of heat in a condition for stretch blow; and it is carried into the opened blow mold 11 by holding the mouth portion with a lip mold 22. Then the preform is set in the upper center of the cavity 12 by closure of the blow mold 11. Further, the blow core 15 is hermetically inserted from above into the mouth portion; thereby the open-mouth periphery of the preform 1 is sandwiched and held with the lip mold 22, and the core member 18 at the tip end of the stretching rod 16 and the skirt member 19 are placed within the preform 1.

Here, the mold surface 14 of the bottom mold 13 is ducked beneath the bottom surface of the cavity so that the bottom surface of the preform is positioned further beneath the bottom edge 11b of the cavity and so that the body portion 2 can be stretched to the bottom edge 11b of the cavity.

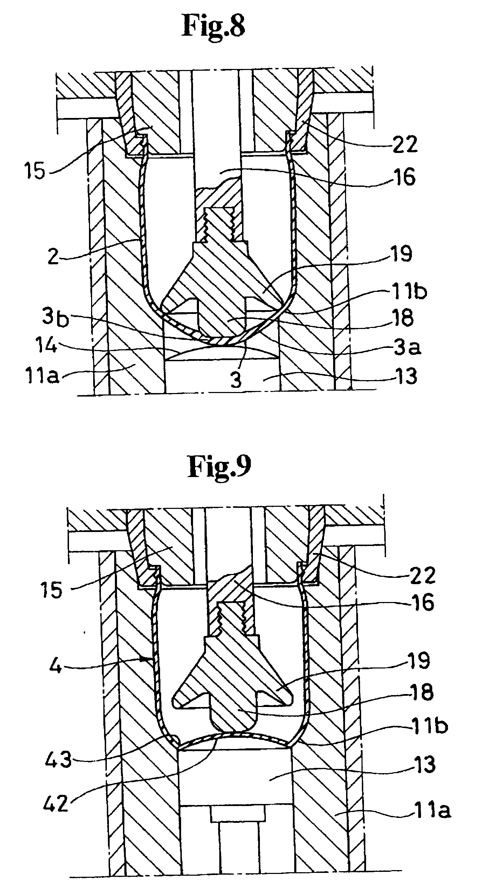

After such operations, the stretching rod 16 is extended by a drive means such as an air cylinder. Then, only the core member 18 presses the central portion 3b of the bottom portion of the preform 1, and stretching is conducted to a condition shown in Fig. 7. At this stretching step, the skirt member 19 is located above the core member 18, and thus the corner portion 2a is not abutted; and only the bottom portion 3 is precedingly stretched to a predetermined dimension.

In the bottom portion 3 in which the central portion 3b is thinner than the intermediate portion 3a, because of this difference in thickness, the amount of heat possessed by the intermediate portion 3a is larger than the central portion. Therefore, when the central portion 3b is pressed by the core member 18, the intermediate portion 3a is precedingly stretched and the protuberance portion is thinly extended, and thus, the difference in thickness between the central portion 3b is eliminated. Then, the central portion 3b is also stretched. When the whole bottom portion 3 is stretched to a set dimension, the skirt member 19 reaches and abuts the corner portion 2a, as shown in Fig. 7, and thereby, the periphery of the bottom portion is evenly pressed to cause stretching of the body portion 2.

After the skirt member 19 abuts the corner portion 2a, the bottom portion 3 is not stretched beyond the set dimension, and it is pushed downwards towards the bottom portion of the cavity along with the stretching of the body portion 2 by means of the skirt member 19. Stretching is continued until the skirt member 16 reaches the bottom edge 11a of the cavity.

At the point in which the skirt member 16 reaches the bottom edge 11b of the cavity, the corner portion 2a is also thinly pressed and stretched, and the bottom portion 3 is received by the insertion space above the mold surface 14 of the bottom mold 13 ducking beneath the bottom surface of the cavity. Along with this stretching operation, air is blown to the preform from the air blow gap 17 of the blow core 15, and the body portion 2 is axially stretched while expanding radially and is pressed against the peripheral wall of the cavity, thus forming the body portion 41 of the wide-mouthed container 4. Further, the bottom portion 3 expands within the insertion space and is made thin. (See Fig. 8.)

After completing stretching by extending the stretching rod 16, the stretching rod 16 is freed. Then the bottom mold 13 is raised under pressure by blown-air, and the bottom portion 3 is pushed up by the mold surface 14. Then, since the body portion 41 is in contact with the peripheral wall surface of the cavity and cooling and solidification is already proceeding, the bottom portion 3 is pressingly extended by the mold surface 14 from the lower side of the bottom edge 11b of the cavity which forms a border so that it bends upwards and thus, is subjected to secondary stretching.

Because of positional relations, stretching caused by the mold surface 14 tends to occur from the central portion 3b which remains thicker than the other portions, and further, the stretching spreads towards the circumference. When the rising of the bottom mold 13 is completed, there is molded a thin, dome-like bottom portion 42 which takes a bottom edge 43 as a border between the body portion 41. Accordingly, there is completed the wide-mouthed container 4 of the first embodiment having a bottom portion 42 which is thin like the body portion 41, and being entirely even in thickness distribution. (See Fig. 9.)

### [Molding of bottom portion of wide-mouthed container 5 of the second embodiment (Fig. 10 through Fig. 13)]

The difference between the molding method of the present embodiment and the molding method for the wide-mouthed container 4 is that, in order to form the bottom surface of a wide-mouthed container 5 into a bellows-like form, the core member 18 and the skirt member 19 of the stretching rod 16 are structured so that they are relatively movable, and that the mold surface 14 of the bottom mold 13 is formed with a projecting and depressing surface.

As shown in Fig. 10, in the stretching rod 16 adopted in the molding method according to the present embodiment, the tip end portion is formed on the narrow shaft portion 16a, and a skirt member 19 is fit, along with a coil spring 21 positioned thereabove, to the narrow shaft portion 16a so that there is play therebetween. On the tip end of the narrow shaft portion 16a, there is attached a core member 18 which has a larger diameter than the narrow shaft portion 16a and which has a stepped portion in its upper edge. The stepped portion of the core member 18 latches with the skirt member 19, and prevents the skirt member 19 from falling off from the narrow shaft portion 16a. The coil spring 21 constantly pressures the skirt member 19 downwards.

On the mold surface 14 of the bottom mold 13 facing the cavity 12, there is formed an acute projecting and depressing surface formed by a plurality of concentric circles.

Similar to the case in molding the wide-mouthed container 4, molding of the bottom portion of the wide-mouthed container 5 by means a blow mold 11 which comprises such a stretching rod 16 and bottom mold 15 can be conducted by holding the mouth portion of the preform 1 with the above-described lip mold 22, and setting the preform 1 into the central portion of the opened blow mold 11 in a general manner.

After setting, the blow core 15 is inserted into the mouth portion from above to thereby sandwich and hold the preform 20 with the lip mold 22, and the core member 18 and the skirt member 19 of the stretching rod 16 are abutted to the predetermined points, and then the mold is closed in a state which prevents the preform from contracting. (See Fig. 10.)

After closing the mold, the stretching rod 16 is extended by a drive such as an air cylinder, and the preform 20 is stretched longitudinally. This stretching is conducted both by the skirt member 19, which is constantly pressured and supported downwards by the coil spring 21, and the core member 18; however, the skirt member 19 stops when it reaches the bottom edge 11b of the cavity.

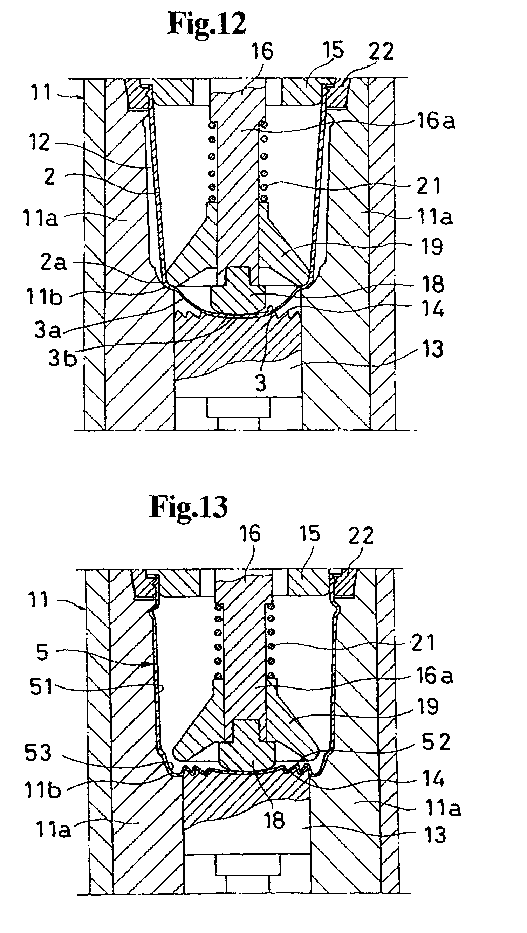

However, working against the coil spring 21, the stretching rod 16 stretches the bottom surface until the core member 18 reaches the mold surface 14 of the bottom mold 13. Thus, since the stretching of the bottom surface is conducted stepwise in a state wherein the periphery of the bottom portion 3 is supported by the skirt member 19 being pressured by the compressed spring member 21 and by the bottom edge 11b of the cavity, it is stretched to be thinner compared to conventional cases. (See Fig. 12.)

The longitudinal stretching of the preform 1 is conducted by blowing air into the preform from the air blow, gap 17 of the blow core 15. After the preform 1 fully expands within the cavity by air-blow and is formed into the wide-mouthed container 5, the driving force of the stretching rod 16 is released, the bottom mold 13 is raised and moved, and the mold surface 14 of the upper portion of the bottom mold is pressured into the cavity, while maintaining the air-blow condition.

The stretching rod 16, which is in a free condition because the driving force has been released, rises along with the core member 18 by mean of the restoring force of the compressed spring member 21 to a point where the core member 18 is received by the skirt member 19. Because of the rise of the bottom mold 13, the core member 18 is pushed back upwards; and thus, the bottom portion 3 which has been primarily stretched is pushed inside the cavity by the mold surface 14 in a state wherein the bottom portion 3 is supported to the bottom edge 11b of the cavity by the skirt member 19.

Accordingly, the peripheral edge 53 of the bottom portion of the wide-mouthed container 5 is molded, and simultaneously, the projecting and depressing surface of the mold surface 14 is strongly engaged into the thinly formed bottom surface 52 of the wide-mouthed container 5 by means of both the pressuring force of the bottom mold 13 and the inner pressure by blown-air. As a result, the acute projecting and depressing surface which is the same as the mold surface 14 is transferred to the bottom surface 52, and the bottom surface comes to have a bellows-like form of concentric circles. (See Fig, 13.)

### INDUSTRIAL APPLICABILITY

In the molding method of the present invention, the axial stretching of the body portion 2 of the preform 1 is conducted by the skirt member 19, and stretching of the central portion 3b of the bottom portion 3 is conducted by the stretching rod 16 in a state in which the periphery of the bottom portion 3 is supported by the skirt member 19. Further, the projecting and depressing surface formed on the mold surface 14 is transferred to the thinly stretched bottom portion 3 of the bottom portion 3 of the wide-mouthed container 5 by pushing in the mold surface 14. Thus, it is possible to reliably transfer even an acute projecting and depressing surface to the bottom surface, which had been deemed difficult to transfer, and it is possible to easily mold a wide-mouthed container 5 in which the bottom surface is of a bellows-like form with an acute projecting and depressing surface formed by a plurality of concentric circles, and in which the structure of the bottom portion deforms into the container by decompression.

## Claims

1. A method for molding a bottom portion of a wide-mouthed container by stretch blow molding, the method comprising the steps of injection-molding a preform which has a thick, short-cylindrical body portion and a thin, plate-like bottom portion which continues from the bottom end of the body portion, and in which the border therebetween is integrally formed as a corner portion; employing, as a blow mold for stretch blow molding the preform into a wide-mouthed container, a blow mold comprising a bottom mold which can proceed and retreat within a cavity; employing, as a stretching rod, a stretching rod comprising both a core member which pressures a central portion of the bottom portion, and a skirt member which is positioned in the periphery of the core member and which pressures the corner portion; carrying out stretching by precedingly stretching either one of the respective body portion or the bottom portion of the preform by means of the stretching rod until the body portion reaches the bottom edge of the cavity, and the bottom portion protrudes below the bottom edge of the cavity and comes to a position above the bottom mold having been ducked beneath a bottom surface of the cavity; then protruding the bottom mold into the cavity in which the preform is in an air-blown state, to further stretch the bottom portion having been primarily stretched upwards from the bottom edge of the cavity; and forming a thin bottom portion of a container with an even thickness distribution.

2. A method for molding a bottom portion of a wide-mouthed container by stretch blow molding according to claim 1 characterized in that: as for the bottom mold of the blow mold, there is used a bottom mold in which the mold surface facing the cavity has an acute projecting and depressing surface formed by a plurality of concentric circles; as for the stretching rod, there is used a stretching rod in that the skirt member is provided around the core member so that it is fixed to the stretching rod with a play existing therebetween, and is constantly pressured downwards by means of a spring member; the bottom mold is protruded into the cavity in a state in which the lower end of the body portion of the preform is pushed to the bottom edge of the cavity by means of the skirt member; the bottom portion having been primarily stretched is further stretched so that it is pushed back upwards from the bottom edge of the cavity; and thus the bottom portion is formed into a bellows-like form with an acute projecting and depressing surface formed by a plurality of concentric circles by means of the bottom mold.

3. A method for molding a bottom portion of a wide-mouthed container by stretch blow molding according to claims 1 or claim 2 characterized in that: the preform is made of a thermoplastic resin which can be stretch blow molded; the bottom portion is comprised of a central portion to which the core member of the stretching rod abuts, and an intermediate portion between the central portion and the corner portion to which the skirt member abuts; and the intermediate portion is formed so that it is made thicker than the central portion by means of a protuberance portion of a concentric circle so that it is stretched before the central portion.

4. A method for molding a bottom portion of a wide-mouthed container by stretch blow molding according to claims 1 or claim 2 characterized in that: the core member and the skirt member of the stretching rod are integrally formed; the core member is protrudingly formed at a required length compared to the skirt meter so that stretching of the bottom portion precedes; and, after the bottom portion is extended by the stretching rod, the skirt member is abutted to the corner portion in the border between the body portion and the bottom portion in order to stretch the body portion down to the bottom edge of the cavity.

5. A method for molding a bottom portion of a wide-mouthed container by stretch blow molding according to claims 1 or claim 2 characterized in that: the stretching rod is insertingly provided in a blow core in a vertically movable manner; by fitting the blow core and a lip mold which sandwiches and holds a mouth portion of the preform, the core member on the tip end of the stretching rod and the skirt member are placed in an inserted position within the preform; and, by extension of the stretching rod, either the core member or the skirt member abuts against either the bottom portion or the corner portion of the preform to carry out stretching.
